# EUROPÄISCHE PATENTSCHRIFT

(11) **EP 3 156 175 B1**
(45) Veröffentlichungstag und Bekanntmachung des Hinweises auf die Patenterteilung: **20.03.2019**
(21) Anmeldenummer: 16191658.0
(22) Anmeldetag: 30.09.2016
(51) Int. Cl.: B23Q 7/14

(54) **WERKSTÜCK-TRANSFERVORRICHTUNG SOWIE WERKZEUGMASCHINE MIT EINER WERKSTÜCK-TRANSFERVORRICHTUNG**
WORKPIECE TRANSFER DEVICE AND MACHINE TOOL WITH A WORKPIECE TRANSFER DEVICE
DISPOSITIF DE TRANSFERT DE PIÈCES À USINER AINSI QUE MACHINE-OUTIL AVEC DISPOSITIF DE TRANSFERT DE PIÈCES À USINER

(30) Priorität: 16.10.2015 DE 102015220185
(43) Veröffentlichungstag der Anmeldung: 19.04.2017
(73) Patentinhaber: Trumpf Sachsen GmbH, 01904 Neukirch (DE)
(72) Erfinder: Knobel, Carsten, 02689 Sohland (DE); Harnisch, Gunter, 01936 Königsbrück (DE); Richter, Christoph, 02681 Schirgiswalde-Kirschau (DE)
(74) Vertreter: Kohler Schmid Möbus Patentanwälte

(56) Entgegenhaltungen:
- WO-A1-2015/063843
- JP-A- S6 434 635

## Beschreibung

Die Erfindung betrifft eine Werkstück-Transfervorrichtung mit einem Werkstückträger sowie mit einem motorischen Antrieb, mittels dessen der Werkstückträger in einer Transportrichtung aus einer Ausgangsposition in eine Zielposition bewegbar ist,
• wobei der motorische Antrieb einen Antriebsmotor sowie ein zwischen dem Antriebsmotor und dem Werkstückträger angeordnetes Getriebe umfasst,
• wobei das zwischen dem Antriebsmotor und dem Werkstückträger angeordnete Getriebe ein mittels des Antriebsmotors antreibbares motorseitiges Getriebeelement in Form eines mittels des Antriebsmotors um eine senkrecht zu der Transportrichtung verlaufende Zahnradachse antreibbaren Antriebszahnrads sowie ein als in der Transportrichtung verlaufende Antriebszahnstange ausgebildetes weiteres Getriebeelement aufweist,
• wobei von dem Antriebszahnrad und der Antriebszahnstange das eine Getriebeelement mit dem Werkstückträger verbunden und dadurch an den Werkstückträger angebunden und mittels des Antriebsmotors gemeinschaftlich mit dem Werkstückträger relativ zu dem anderen Getriebeelement in der Transportrichtung antreibbar ist und
• wobei das Antriebszahnrad und die Antriebszahnstange mit einem mittels einer Hubvorrichtung senkrecht zu der Transportrichtung ausgeführten Kupplungshub relativ zueinander zustellbar und dadurch miteinander in Eingriff bringbar sind, wobei aufgrund des gegenseitigen Eingriffs des Antriebszahnrads und der Antriebszahnstange eine Antriebsverbindung zwischen dem Antriebszahnrad und der Antriebszahnstange hergestellt ist, aufgrund derer das an den Werkstückträger angebundene Getriebeelement gemeinschaftlich mit dem Werkstückträger mittels des Antriebsmotors in der Transportrichtung antreibbar ist.

Die Erfindung betrifft des Weiteren eine Werkzeugmaschine zum Bearbeiten von Werkstücken, insbesondere von Blechen, mit einem Arbeitsbereich, in welchen Werkstücke, insbesondere Bleche, mittels einer Bearbeitungsvorrichtung der Werkzeugmaschine bearbeitbar sind sowie mit einer Werkstück-Transfervorrichtung der vorstehenden Art, mittels derer Werkstücke dem Arbeitsbereich der Werkzeugmaschine zuführbar und/oder aus dem Arbeitsbereich der Werkzeugmaschine abführbar sind.

Gattungsgemäßer Stand der Technik ist offenbart in WO 2015/063843 A1. Diese Druckschrift offenbart eine maschinelle Anlage mit zwei Werkzeugmaschinen und einem Palettenlager. Mittels eines Transportwagens werden Paletten zwischen den Werkzeugmaschinen einerseits und dem Palettenlager andererseits transferiert. Zu diesem Zweck ist an dem Transportwagen ein Schlitten mit einem Antriebsritzel in horizontaler Richtung geführt. Mittels einer ersten Kolben-Zylinder-Einheit kann der Schlitten gegenüber dem Transportwagen in horizontaler Richtung zugestellt werden. Eine zweite Kolben-Zylinder-Einheit dient dazu, das Antriebsritzel relativ zu dem Schlitten in vertikaler Richtung zuzustellen. Die Paletten sind an ihrer Rückseite mit einer horizontalen Zahnstange versehen. Zur Übernahme einer Palette wird der an dem Transportwagen geführte Schlitten mittels der ersten Kolben-Zylinder-Einheit aus einer Ausgangsposition an dem Transportwagen in horizontaler Richtung bewegt, bis das an dem Schlitten vorgesehene Antriebsritzel unterhalb der Zahnstange an der Rückseite der zu übernehmenden Palette zu liegen kommt. Durch Betätigen der zweiten Kolben-Zylinder-Einheit wird dann das Antriebsritzel in vertikaler Richtung angehoben, bis es mit seiner Verzahnung in die Verzahnung der Zahnstange an der Palette eingreift. Dadurch wird zwischen dem Antriebsritzel an dem Schlitten und der Zahnstange an der Palette eine Antriebsverbindung hergestellt und die Palette wird von der betreffenden Lagereinheit des Palettenlagers auf den Transportwagen gezogen. Abschließend wird der Schlitten gemeinsam mit der über den gegenseitigen Eingriff des Antriebsritzels und der Zahnstange an dem Schlitten festgelegten Palette in horizontaler Richtung bewegt, bis die Palette ihre endgültige Position auf dem Transportwagen einnimmt. Zur Übergabe einer Palette von dem Transportwagen an eine Lagereinheit des Palettenlagers oder an eine der Werkzeugmaschinen laufen die vorstehenden Verfahrensschritte in umgekehrter Reihenfolge ab.

Weiterer Stand der Technik ist bekannt aus EP 1 462 211 A1. Diese Druckschrift betrifft eine Werkzeugmaschine, insbesondere ein Bearbeitungszentrum, mit einem Palettenwechselsystem. Das Palettenwechselsystem dient dazu, eine mit einem Werkstück beladene Palette zwischen einem Bearbeitungstisch im Inneren eines Bearbeitungsraumes der Werkzeugmaschine und einem Rüstplatz außerhalb des Arbeitsraums der Werkzeugmaschine zu bewegen. Die Bewegungen der Palette werden mittels eines an der Palette angreifenden Mitnehmers erzeugt, der seinerseits an einem motorisch angetriebenen Schlitten angebracht ist. Als motorischer Antrieb für den Schlitten ist im Einzelnen ein Spindelantrieb beschrieben, mit einer durch einen Motor angetriebenen Antriebsspindel, auf welcher der mit dem Mitnehmer versehene Schlitten aufsitzt. Zur Anbindung an den Mitnehmer wird die Palette durch den Bearbeitungstisch der Werkzeugmaschine seitlich bewegt. Dadurch gelangt der Mitnehmer in Eingriff mit einem an der Palette vorgesehenen Kupplungselement.

Die Aufgabe der vorliegenden Erfindung besteht darin, eine Werkstück-Transfervorrichtung bereitzustellen, die mit kostengünstigen Mitteln eine hochgenaue Positionierung von Werkstücken ermöglicht.

Erfindungsgemäß gelöst wird diese Aufgabe durch die Werkstück-Transfervorrichtung gemäß Patentanspruch 1 und durch die Werkzeugmaschine gemäß Patentanspruch 8.

Anspruchsgemäß wird ein Werkstückträger, der mit einem zu bearbeitenden und/oder mit einem bearbeiteten Werkstück beladen werden kann, in einer Transportrichtung mittels eines motorischen Antriebs angetrieben, der einen Antriebsmotor und ein zwischen dem Antriebsmotor und dem Werkstückträger angeordnetes Zahnradgetriebe umfasst. Als von dem Antriebsmotor angetriebenes motorseitiges Getriebeelement ist ein Antriebszahnrad vorgesehen. Als weiteres Getriebeelement weist das Zahnradgetriebe der anspruchsgemäßen Werkstück-Transfervorrichtung eine mit dem Antriebszahnrad zusammenwirkende Antriebszahnstange auf. Entweder das Antriebszahnrad oder die Antriebszahnstange ist mit dem Werkstückträger bewegungsverbunden und folglich gemeinschaftlich mit dem Werkstückträger in der Transportrichtung bewegbar. Durch einen senkrecht zu der Transportrichtung ausgeführten Kupplungshub werden das Antriebszahnrad und die Antriebszahnstange miteinander in Eingriff gebracht. Bei gegenseitigem Eingriff des Antriebszahnrads und der Antriebszahnstange besteht zwischen den beiden Getriebeelementen eine Antriebsverbindung, aufgrund derer das mit dem Werkstückträger bewegungsverbundene Getriebeelement gemeinschaftlich mit dem Werkstückträger durch den Antriebsmotor in der Transportrichtung angetrieben und dabei relativ zu dem anderen, vorzugsweise in der Transportrichtung stationäre Getriebeelement bewegt werden kann.

Anders als beispielsweise eine Rollenkette, die zur Positionierung eines Werkstückträgers einer Werkstück-Transfervorrichtung auch in Frage kommt, die aber aufgrund des unvermeidbaren Spieles der Kettenglieder und auch aufgrund von Kettendehnung und -verschleiß nur eine mit einer gewissen Ungenauigkeit behaftete Positionierung des in der Transportrichtung bewegten Werkstückträgers ermöglicht, zeichnet sich das anspruchsgemäße Zahnradgetriebe durch eine hohe Positioniergenauigkeit bei der Bewegung des über das Zahnradgetriebe angetriebenen Werkstückträgers in der Transportrichtung aus. Ungeachtet der hohen Positioniergenauigkeit ist das anspruchsgemäße Zahnradgetriebe ausgesprochen kostengünstig. Insofern besitzt das anspruchsgemäße Zahnradgetriebe Vorteile beispielsweise gegenüber Schubketten, die auch als Alternative zu dem erfindungsgemäßen Zahnradgetriebe denkbar wären.

Zur Herstellung der Antriebsverbindung zwischen dem Antriebszahnrad und der Antriebszahnstange des Werkstückträgerantriebs sind das Antriebszahnrad und die Antriebszahnstange lediglich mit einem senkrecht zu der Transportrichtung des Werkstückträgers auszuführenden Kupplungshub relativ zueinander zuzustellen. Ein derartiger Kupplungshub lässt sich mit geringem Aufwand realisieren. Im Falle der erfindungsgemäßen Werkstück-Transfervorrichtung ist eines der Getriebeelemente des motorischen Werkstückträgerantriebs mit dem Werkstückträger verbunden. Der von dem Antriebszahnrad und der Antriebszahnstange senkrecht zu der Transportrichtung auszuführende Kupplungshub kann folglich dadurch realisiert werden, dass der Werkstückträger mittels einer Hubvorrichtung senkrecht zu der Transportrichtung zugestellt wird.

Gegebenenfalls kann der Kupplungshub mit einer bei Betrieb der erfindungsgemäßen Werkstück-Transfervorrichtung ohnehin auszuführenden Hubbewegung kombiniert werden.

Die Hubvorrichtung für den Werkstückträger umfasst zweckmäßigerweise eine mittels eines Hubantriebs der Hubvorrichtung senkrecht zu der Transportrichtung zustellbare Tragstruktur, an welcher der Werkstückträger auf einer Lagerfläche in der Transportrichtung bewegbar gelagert ist.

An der erfindungsgemäßen Werkzeugmaschine befindet sich der Werkstückträger bei zwischen dem Antriebszahnrad und der Antriebszahnstange des motorischen Antriebs für den Werkstückträger bestehender Antriebsverbindung senkrecht zu der Transportrichtung auf einem Transportniveau, auf welchem der Werkstückträger in der Transportrichtung in den Arbeitsbereich der Werkzeugmaschine hinein oder aus dem Arbeitsbereich der Werkzeugmaschine heraus bewegt werden kann, wobei eine als Kupplungshub ausgeführte Hubbewegung des Werkstückträgers dazu dienen kann, den Werkstückträger senkrecht zu der Transportrichtung auf dem Transportniveau anzuordnen, auf welchem der Werkstückträger in der Transportrichtung in den Arbeitsbereich der Werkzeugmaschine hinein oder aus dem Arbeitsbereich der Werkzeugmaschine heraus bewegt werden kann.

Besondere Ausführungsarten der Erfindung nach den unabhängigen Patentansprüchen 1 und 8 ergeben sich aus den abhängigen Patentansprüchen 2 bis 7 und 9.

Grundsätzlich kann im Falle der Erfindung als an den Werkstückträger angebundenes, insbesondere als mit dem Werkstückträger verbundenes Getriebeelement wahlweise das motorseitige Antriebszahnrad oder die Antriebszahnstange vorgesehen sein. In bevorzugter Ausgestaltung der Erfindung ist ausweislich Patentanspruch 2 die Antriebszahnstange an den Werkstückträger angebunden, insbesondere mit dem Werkstückträger verbunden. Nachdem andernfalls gemeinsam mit dem Antriebszahnrad auch der dieses antreibende Antriebsmotor an dem Werkstückträger vorzusehen wäre, ist die Anbindung der Antriebszahnstange an den Werkstückträger in mehrerlei Hinsicht vorteilhaft. Insbesondere ist die gemeinschaftlich mit dem Werkstückträger in der Transportrichtung zu bewegende Masse der Antriebszahnstange verhältnismäßig gering. Darüber hinaus entfällt die andernfalls bestehende Notwendigkeit, den mit dem Werkstückträger mitbewegten Antriebsmotor des Antriebszahnrads während der Bewegung in der Transportrichtung mit Energie zu versorgen.

Einen weiteren Vorteil der Anbindung der Antriebszahnstange an den Werkstückträger nutzt die in Patentanspruch 3 beschriebene Bauart der erfindungsgemäßen Werkstück-Transfervorrichtung. Ist die Antriebszahnstange an dem Werkstückträger angebracht, so lässt sich der maximale Verfahrweg des Werkstückträgers auf einfache Art und Weise über die Länge der Antriebszahnstange hinaus verlängern, indem mehrere Antriebszahnräder in der Transportrichtung gegeneinander versetzt angeordnet werden. Die Antriebszahnräder können dabei durch einen gemeinsamen oder durch jeweils einen eigenen Antriebsmotor angetrieben werden. Der in der Transportrichtung bestehende Achsabstand der gegeneinander versetzten Antriebszahnräder ist derart zu bemessen, dass sich stets zumindest eines der Antriebszahnräder mit der Antriebszahnstange im Eingriff befindet.

Die insbesondere im Zusammenhang mit Patentanspruch 1 geschilderten Vorteile eines Zahnradgetriebes stellen sich insbesondere dann ein, wenn das Antriebszahnrad und die Antriebszahnstange jeweils mit einer Triebstockverzahnung versehen sind (Patentanspruch 4). Die Triebstockbauart eines Zahnradgetriebes ist insbesondere unter Kostengesichtspunkten vorteilhaft.

Gegenstand der Patentansprüche 5 bis 7 sind Ausführungsarten der erfindungsgemäßen Werkstück-Transfervorrichtung, im Falle derer mehrere Werkstückträger senkrecht zu der Transportrichtung gegeneinander versetzt angeordnet sind. Derartige Werkstück-Transfervorrichtungen sind insbesondere in Form sogenannter Palettenwechsler gebräuchlich. Im Falle der Erfindung kann jeder der Werkstückträger durch einen erfindungsgemäßen motorischen Antrieb in der Transportrichtung bewegt werden. Dementsprechend ist für jeden der Werkstückträger ein motorischer Antrieb mit einem Antriebsmotor und einem zwischen dem Antriebsmotor und dem Werkstückträger angeordneten Getriebe vorgesehen, das seinerseits ein motorseitiges Antriebszahnrad und als weiteres Getriebeelement eine mit dem Antriebszahnrad zusammenwirkende Antriebszahnstange umfasst.

Im Falle der bevorzugten Erfindungsbauart gemäß Patentanspruch 6 ist der Antrieb einander senkrecht zu der Transportrichtung benachbarter Werkstückträger derart konfiguriert, dass eine gemeinsame Antriebszahnstange oder ein gemeinsames Antriebszahnrad zum Antrieb beider Werkstückträger in der Transportrichtung genutzt werden kann. Zu diesem Zweck ist an jedem der einander benachbarten Werkstückträger jeweils ein Antriebszahnrad oder eine Antriebszahnstange angebracht. Zwischen den an die beiden Werkstückträger angebundenen Antriebszahnrädern ist eine gemeinsame Antriebszahnstange, zwischen den mit den beiden Werkstückträgern verbundenen Antriebszahnstangen ist ein gemeinsames Antriebszahnrad angeordnet. Durch einen ersten Kupplungshub senkrecht zu der Transportrichtung kann das an den einen der Werkstückträger angebundene Antriebszahnrad mit der gemeinsamen Antriebszahnstange oder die an den einen der Werkstückträger angebundene Antriebszahnstange mit dem gemeinsamen Antriebszahnrad in Eingriff gebracht und anschließend gemeinschaftlich mit dem betreffenden Werkstückträger in der Transportrichtung bewegt werden. Alternativ besteht die Möglichkeit durch einen senkrecht zu der Transportrichtung und dabei in Gegenrichtung des ersten Kupplungshubs ausgeführten zweiten Kupplungshub das an dem anderen der Werkstückträger angebrachte Antriebszahnrad mit der gemeinsamen Antriebszahnstange oder die mit dem anderen der Werkstückträger verbundene Antriebszahnstange mit dem gemeinsamen Antriebszahnrad in Eingriff zu bringen. Ist auf diese Art und Weise eine Antriebsverbindung zwischen dem an dem Werkstückträger angebrachten Getriebeelement und dem weiteren Getriebeelement des motorischen Werkstückträgerantriebs hergestellt, so kann auch der zweite Werkstückträger motorisch angetrieben in der Transportrichtung bewegt werden.

In Weiterbildung der Erfindung gemäß Patentanspruch 6 ist ausweislich Patentanspruch 7 zur Erzeugung der gegensinnigen Kupplungshübe eine Hubvorrichtung mit einer Tragstruktur und einem Hubantrieb hierfür vorgesehen. An der Tragstruktur sind die beiden einander benachbarten Werkstückträger auf zwei senkrecht zu der Transportrichtung gegeneinander versetzten Ebenen angeordnet. Durch Zustellen der Tragstruktur mittels des Hubantriebs der Hubvorrichtung senkrecht zu der Transportrichtung wird wahlweise das Getriebe des motorischen Antriebs für den einen Werkstückträger oder das Getriebe des motorischen Antriebs für den anderen Werkstückträger mit einem Kupplungshub in den Funktionszustand geschaltet, in dem die Werkstückträger mittels des motorischen Antriebs in der Transportrichtung bewegt werden können.

Eine erfindungsgemäße Werkstück-Transfervorrichtung gemäß Patentanspruch 7 ist im Falle der erfindungsgemäßen Werkzeugmaschine gemäß Patentanspruch 9 vorgesehen. Die mittels des Hubantriebs der Tragstruktur für die beiden einander senkrecht zu der Transportrichtung benachbarten Werkstückträger ausgeführten Kupplungshübe sind dabei derart bemessen, dass jeder der Werkstückträger aufgrund des betreffenden Kupplungshubs auf ein Transportniveau gelangt, auf welchem eine an der Tragstruktur vorgesehene Aufstellfläche für den Werkstückträger mit einer Bewegungsbahn fluchtet, auf welcher der Werkstückträger in den Arbeitsbereich der Werkzeugmaschine hinein oder aus dem Arbeitsbereich der Werkzeugmaschine heraus bewegt werden kann.

Nachfolgend wird die Erfindung anhand beispielhafter schematischer Darstellungen näher erläutert.

Es zeigen:
- Figur 1: eine Werkzeugmaschine mit einer Werkstück-Transfervorrichtung erster Bauart in einem ersten Betriebszustand,
- Figur 2: die Anordnung gemäß Figur 1 bei einem zweiten Betriebszustand der Werkstück-Transfervorrichtung,
- Figur 3: eine zweite Bauart einer Werkstück-Transfervorrichtung und
- Figur 4: eine dritte Bauart einer Werkstück-Transfervorrichtung.

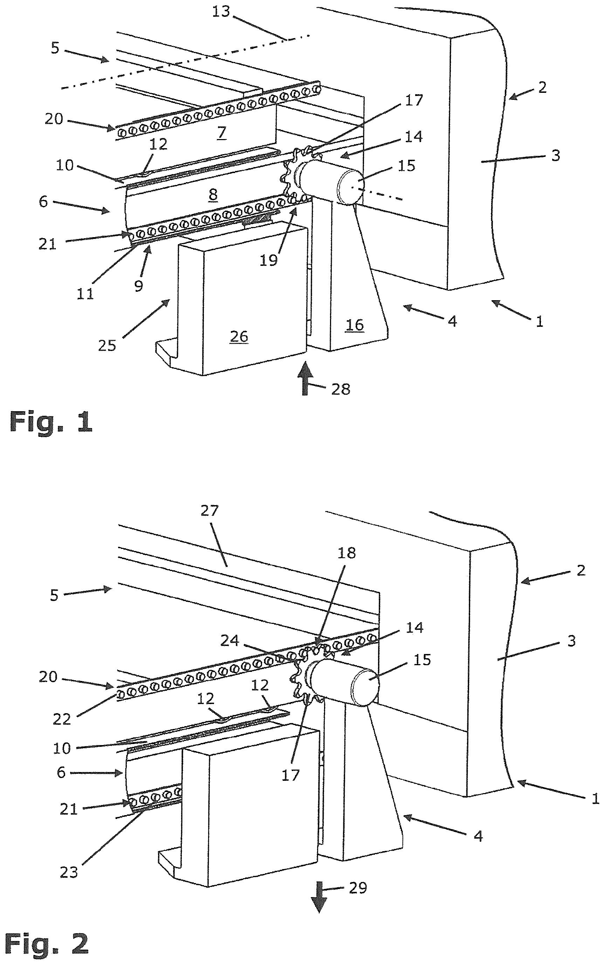

Gemäß den Figuren 1 und 2 umfasst eine Werkzeugmaschine 1 zum Bearbeiten von Blechen einen Arbeitsbereich 2, der mittels einer Einhausung 3 gegen die Umgebung abgeschirmt ist. In dem Arbeitsbereich 2 ist als Bearbeitungsvorrichtung der Werkzeugmaschine 1 eine der Einfachheit halber nicht dargestellte Laserschneidvorrichtung üblicher Bauart angeordnet. Die Laserschneidvorrichtung besitzt in bekannter Weise einen Laserschneidkopf, der über ein zu bearbeitendes Blech bewegbar ist und dabei das Blech schneidend bearbeitet.

Ein zu bearbeitendes Blech wird dem Arbeitsbereich 2 der Werkzeugmaschine 1 mittels einer außerhalb des Arbeitsbereichs 2 angeordneten und als Palettenwechsler ausgebildeten Werkstück-Transfervorrichtung 4 zugeführt. Nach Beendigung der Blechbearbeitung dient die Werkstück-Transfervorrichtung 4 dazu, das bearbeitete Blech aus dem Arbeitsbereich 2 der Werkzeugmaschine 1 herauszubewegen. Dabei ist sowohl das noch unbearbeitete Blech als auch das bearbeitete Blech auf einem Werkstückträger gelagert. Auf dem Werkstückträger verbleibt das Blech auch während der Bearbeitung durch die Laserschneidvorrichtung.

Die Werkstück-Transfervorrichtung 4 gemäß den Figuren 1 und 2 weist zwei derartige Werkstückträger auf, in dem gezeigten Beispielsfalls eine Werkstückpalette 5 und eine Werkstückpalette 6. Die beiden Werkstückpalette 5, 6 sind stark schematisch dargestellt. Ein rechteckiger Palettenrahmen 7 umschließt eine in den Figuren nicht gezeigte Werkstückauflage der Werkstückpalette 5, wobei als Werkstückauflage ein herkömmlicher Auflagerost vorgesehen ist, der von einer Mehrzahl parallel zueinander verlaufender Auflageleisten gebildet wird. In gleicher Weise umschließt ein rechteckiger Palettenrahmen 8 einen nicht gezeigten Auflagerost der Werkstückpalette 6.

Die Werkstückpaletten 5, 6 sind an einer Tragstruktur 9 der Werkstück-Transfervorrichtung 4 in vertikaler Richtung übereinander angeordnet. Die Werkstückpalette 5 steht dabei auf einer horizontalen Lagerfläche 10 der Tragstruktur 9, die Werkstückpalette 6 auf einer horizontalen Lagerfläche 11 der Tragstruktur 9. An der Unterseite sind die Palettenrahmen 7, 8 mit Laufrollen versehen, von denen in den Figuren 1 und 2 lediglich Laufrollen 12 der Werkstückpalette 5 zu erkennen sind. Über die Laufrollen 12 sind die Werkstückpalette 5 auf der Lagerfläche 10 der Tragstruktur 9 und die Werkstückpalette 6 auf der Lagerfläche 11 der Tragstruktur 9 in einer in Figur 1 durch eine strichpunktierte Linie veranschaulichten horizontalen Transportrichtung 13 bewegbar gelagert.

Bewegungen der Werkstückpaletten 5, 6 in der Transportrichtung 13 werden mittels eines motorischen Antriebs 14 der Werkstück-Transfervorrichtung 4 erzeugt.

Der motorische Antrieb 14 umfasst einen elektrischen Antriebsmotor 15, der an einem stationären Ständer 16 montiert ist. Auf der Motorwelle des Antriebsmotors 15 sitzt ein um eine in Figur 1 strichpunktierte Zahnradachse antreibbares Antriebszahnrad 17 auf. Das Antriebszahnrad 17 bildet ein gemeinsames motorseitiges Getriebeelement zweier als Zahnradgetriebe ausgeführter Getriebe 18, 19. Als weiteres Getriebeelement des Getriebes 18 ist dem Antriebszahnrad 17 eine an dem Palettenrahmen 7 der Werkstückpalette 5 montierte Antriebszahnstange 20 zugeordnet. Das Getriebe 19 umfasst zusätzlich zu dem Antriebszahnrad 17 eine Antriebszahnstange 21, die an dem Palettenrahmen 8 der Werkstückpalette 6 angebracht ist. Beide Antriebszahnstangen 20, 21 erstrecken sich in der Transportrichtung 13. Die Antriebszahnstange 20 ist mit einer Triebstockverzahnung 22, die Antriebszahnstange 21 mit einer Triebstockverzahnung 23 versehen. Eine komplementäre Triebstockverzahnung 24 weist das Antriebszahnrad 17 auf.

Die Tragstruktur 9 ist Teil einer Hubvorrichtung 25 und kann mittels eines nicht gezeigten hydraulischen Hubantriebs relativ zu einem Sockel 26 der Hubvorrichtung 25 senkrecht zu der Transportrichtung 13 zugestellt werden.

Mit der Zustellbewegung der Tragstruktur 9 geht eine entsprechende Zustellbewegung der an der Tragstruktur 9 gelagerten Werkstückpaletten 5, 6 sowie der an den Werkstückpaletten 5, 6 angebrachten Antriebszahnstangen 20, 21 einher.

Figur 1 zeigt die Werkstück-Transfervorrichtung 4 im Anschluss an einen als aufwärtsgerichtete Zustellbewegung der Werkstückpalette 6 ausgeführten und durch einen Pfeil 28 veranschaulichten Kupplungshub. Durch diesen Kupplungshub ist das Antriebszahnrad 17 mit der an der Werkstückpalette 6 angebrachten Antriebszahnstange 21 in Eingriff gebracht worden. Dabei war der Kupplungshub derart bemessen, dass nach dem Kupplungshub die an der Tragstruktur 9 für die Werkstückpalette 6 vorgesehene Lagerfläche 11 mit einer in der Darstellung nicht erkennbaren horizontalen Bewegungsbahn im Innern des Arbeitsbereichs 2 der Werkzeugmaschine 1 in der Transportrichtung 13 fluchtet.

Wird ausgehend von den Verhältnissen gemäß Figur 1 der motorische Antrieb 14 der Werkstück-Transfervorrichtung 4 betätigt, so treibt der Antriebsmotor 15 über das Antriebszahnrad 17 und die Antriebszahnstange 21 des Getriebes 19 die Werkstückpalette 6 mit einer Bewegung in der Transportrichtung 13 an und die Werkstückpalette 6 fährt durch eine Öffnung 27 der Einhausung 3 in den Arbeitsbereich 2 der Werkzeugmaschine 1 ein.

Auf entsprechende Art und Weise kann die Werkstückpalette 5 in den Arbeitsbereich 2 der Werkzeugmaschine 1 bewegt werden. Der betreffende Betriebszustand der Werkstück-Transfervorrichtung 4 ist in Figur 2 veranschaulicht. Durch einen als abwärtsgerichtete Zustellbewegung der Tragstruktur 9 und der Werkstückpalette 5 ausgeführten und in Figur 2 durch einen Pfeil 29 veranschaulichten Kupplungshub wurde die an der Werkstückpalette 5 montierte Antriebszahnstange 20 mit dem Antriebszahnrad 17 des motorischen Antriebs 14 in Eingriff gebracht. Die an der Tragstruktur 9 vorgesehene Lagerfläche 10 für die Werkstückpalette 5 fluchtet aufgrund des Kupplungshubs mit der horizontalen Bewegungsbahn im Innern des Arbeitsbereichs 2 der Werkzeugmaschine 1 und durch Betätigen des motorischen Antriebs 14 kann die Werkstückpalette 5 durch die Öffnung 27 der Einhausung 3 in den Arbeitsbereich 2 der Werkzeugmaschine 1 hineinbewegt werden.

Nach der Überführung einer der Werkstückpaletten 5, 6 in den Arbeitsbereich 2 wird die Öffnung 27 geschlossen und dadurch der Arbeitsbereich 2 für die Dauer der Bearbeitung des auf der Werkstückpalette 5 oder der Werkstückpalette 6 gelagerten Blechs gegen die Umgebung abgeschirmt.

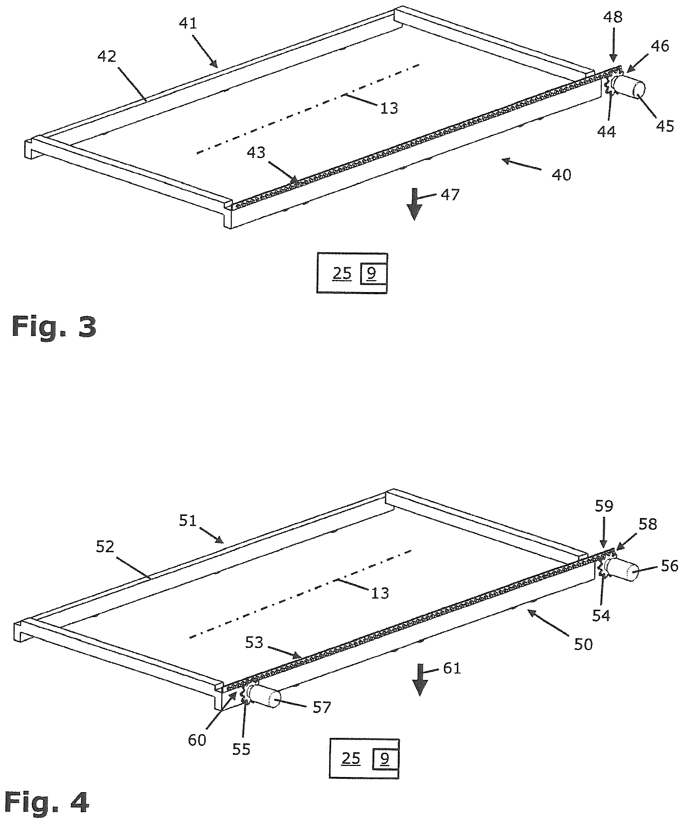

Gegenüber der Werkstück-Transfervorrichtung 4 gemäß den Figuren 1 und 2 vereinfachte Werkstück-Transfervorrichtungen 40, 50 sind in den Figuren 3 und 4 dargestellt. Die Werkstück-Transfervorrichtungen 40, 50 können anstelle der Transfervorrichtung 4 dem Arbeitsbereich 2 der Werkzeugmaschine 1 in der Transportrichtung 13 vorgelagert sein.

Die Werkstück-Transfervorrichtung 40 gemäß Figur 3 umfasst als Werkstückträger eine Werkstückpalette 41 mit einem Palettenrahmen 42 und einem nicht dargestellten Auflagerost für Bleche. An dem Palettenrahmen 42 ist eine in der horizontalen Transportrichtung 13 verlaufende Antriebszahnstange 43 montiert. Der Antriebszahnstange 43 zugeordnet ist ein Antriebszahnrad 44, das gemeinsam mit der Antriebszahnstange 43 und einem elektrischen Antriebsmotor 45 einen motorischen Antrieb 46 der Werkstück-Transfervorrichtung 40 bildet. Mittels einer der Hubvorrichtung 25 der Werkstück-Transfervorrichtung 4 entsprechenden Hubvorrichtung kann die an einer Tragstruktur der Hubvorrichtung gelagerte Werkstückpalette 41 in vertikaler Richtung angehoben und abgesenkt werden.

Eine abwärts gerichtete Zustellbewegung der Tragstruktur und der daran gelagerten Werkstückpalette 41 dient als Kupplungshub (Pfeil 47), aufgrund dessen die Antriebszahnstange 43 und das Antriebszahnrad 44 des motorischen Antriebs 46 miteinander in Eingriff kommen und ein Getriebe 48 bilden, über welches der Antriebsmotor 45 die Werkstückpalette 41 in der Transportrichtung 13 antreiben kann.

Die Werkstück-Transfervorrichtung 50 gemäß Figur 4 erzeugt Bewegungen einer Werkstückpalette 51 in der Transportrichtung 13. Zu diesem Zweck ist an einem Palettenrahmen 52 der Werkstückpalette 51 eine Antriebszahnstange 53 montiert. Abweichend von der Werkstück-Transfervorrichtung 40 wirken im Falle der Werkstück-Transfervorrichtung 50 mit der Antriebszahnstange 53 zwei Antriebszahnräder 54, 55 zusammen. Das Antriebszahnrad 54 wird durch einen Antriebsmotor 56, das Antriebszahnrad 55 durch einen Antriebsmotor 57 angetrieben. Gemeinsam bilden die Antriebszahnstange 53, die Antriebszahnräder 54, 55 und die Antriebsmotoren 56, 57 einen motorischen Antrieb 58 der Werkstück-Transfervorrichtung 50.

Die auf den Motorwellen der Antriebsmotoren 56, 57 aufsitzenden Antriebszahnräder 54, 55 sind in der Transportrichtung 13 gegeneinander versetzt, wobei der Achsabstand der Antriebszahnräder 54, 55 kleiner ist als die Länge der Antriebszahnstange 53. Infolgedessen befindet sich bei Bewegungen der Werkstückpalette 51 in der Transportrichtung 13 die an der Werkstückpalette 51 angebrachte Antriebszahnstange 53 stets mit wenigstens einem der Antriebszahnräder 54, 55 im Eingriff und die Werkstückpalette 51 kann in der Transportrichtung 13 über eine Distanz bewegt werden, die länger ist als die Antriebszahnstange 53. Das Antriebszahnrad 54 bildet dabei gemeinsam mit der Antriebszahnstange 53 ein Getriebe 59. Ein Getriebe 60 umfasst die Antriebszahnstange 53 sowie das Antriebszahnrad 55.

Auch die Werkstückpalette 51 ist an einer nicht gezeigten Tragstruktur einer der Hubvorrichtung 25 der Werkstück-Transfervorrichtung 4 entsprechenden Hubvorrichtung der Werkstück-Transfervorrichtung 50 gelagert und gemeinschaftlich mit der Tragstruktur senkrecht zu der Transportrichtung 13 zustellbar. Ein als abwärtsgerichtete Zustellbewegung der Tragstruktur und der Werkstückpalette 51 ausgeführter Kupplungshub der an der Werkstückpalette angebrachten Antriebszahnstange 53 relativ zu den Antriebszahnrädern 54, 55 ist in Figur 4 durch einen Pfeil 61 dargestellt und hat über die Getriebe 59, 60 eine Antriebsverbindung zwischen den Antriebsmotoren 56, 57 des motorischen Antriebs 58 und der Werkstückpalette 51 der Werkstück-Transfervorrichtung 50 hergestellt.

## Patentansprüche

1. Werkstück-Transfervorrichtung mit einem Werkstückträger (5, 6; 41; 51) sowie mit einem motorischen Antrieb (14, 46, 58), mittels dessen der Werkstückträger (5, 6, 41, 51) in einer Transportrichtung (13) aus einer Ausgangsposition in eine Zielposition bewegbar ist,
• wobei der motorische Antrieb (14, 46, 58) einen Antriebsmotor (15, 45, 56, 57) sowie ein zwischen dem Antriebsmotor (15, 45, 56, 57) und dem Werkstückträger (5, 6, 41, 51) angeordnetes Getriebe (18, 19, 48, 59, 60) umfasst,
• wobei das zwischen dem Antriebsmotor (15, 45, 56, 57) und dem Werkstückträger (5, 6, 41, 51) angeordnete Getriebe (18, 19, 48, 59, 60) ein mittels des Antriebsmotors (15, 45, 56, 57) antreibbares motorseitiges Getriebeelement in Form eines mittels des Antriebsmotors (15, 45, 56, 57) um eine senkrecht zu der Transportrichtung (13) verlaufende Zahnradachse antreibbaren Antriebszahnrads (17, 44, 54, 55) sowie ein als in der Transportrichtung (13) verlaufende Antriebszahnstange (20, 21, 43, 53) ausgebildetes weiteres Getriebeelement aufweist,
• wobei von dem Antriebszahnrad (17, 44, 54, 55) und der Antriebszahnstange (20, 21, 43, 53) das eine Getriebeelement mit dem Werkstückträger (5, 6, 41, 51) verbunden und dadurch an den Werkstückträger (5, 6, 41, 51) angebunden und mittels des Antriebsmotors (15, 45, 56, 57) gemeinschaftlich mit dem Werkstückträger (5, 6, 41, 51) relativ zu dem anderen Getriebeelement in der Transportrichtung (13) antreibbar ist,
• wobei das Antriebszahnrad (17, 44, 54, 55) und die Antriebszahnstange (20, 21, 43, 53) mit einem mittels einer Hubvorrichtung (25) senkrecht zu der Transportrichtung (13) ausgeführten Kupplungshub (28, 29, 47, 61) relativ zueinander zustellbar und dadurch miteinander in Eingriff bringbar sind, wobei aufgrund des gegenseitigen Eingriffs des Antriebszahnrads (17, 44, 54, 55) und der Antriebszahnstange (20, 21, 43, 53) eine Antriebsverbindung zwischen dem Antriebszahnrad (17, 44, 54, 55) und der Antriebszahnstange (20, 21, 43, 53) hergestellt ist, aufgrund derer das an den Werkstückträger (5, 6, 41, 51) angebundene Getriebeelement gemeinschaftlich mit dem Werkstückträger (5, 6, 41, 51) mittels des Antriebsmotors (15, 45, 56, 57) in der Transportrichtung (13) antreibbar ist,
**dadurch gekennzeichnet,**
**dass** eine Hubvorrichtung (25) vorgesehen ist, mittels derer der Kupplungshub (28, 29, 47, 61) ausführbar ist, indem mittels der Hubvorrichtung (25) der Werkstückträger (5, 6, 41, 51) gemeinschaftlich mit dem damit verbundenen Antriebszahnrad (17, 44, 54, 55) relativ zu der Antriebszahnstange (20, 21, 43, 53) oder indem mittels der Hubvorrichtung (25) der Werkstückträger (5, 6, 41, 51) gemeinschaftlich mit der damit verbundenen Antriebszahnstange (20, 21, 43, 53) relativ zu dem Antriebszahnrad (17, 44, 54, 55) senkrecht zu der Transportrichtung (13) zustellbar ist und
**dass** die Hubvorrichtung (25) für den Werkstückträger (5, 6, 41, 51) eine mittels eines Hubantriebs der Hubvorrichtung (25) senkrecht zu der Transportrichtung (13) zustellbare Tragstruktur (9) aufweist mit einer sich in der Transportrichtung (13) erstreckenden Lagerfläche (10, 11) für den Werkstückträger (5, 6, 41, 51), auf welcher der Werkstückträger (5, 6, 41, 51) in der Transportrichtung (13) bewegbar gelagert ist.

2. Werkstück-Transfervorrichtung nach Anspruch 1, **dadurch gekennzeichnet, dass** die Antriebszahnstange (20, 21, 43, 53) an den Werkstückträger (5, 6, 41, 51) angebunden, insbesondere mit dem Werkstückträger (5, 6, 41, 51) verbunden ist.

3. Werkstück-Transfervorrichtung nach Anspruch 2, **dadurch gekennzeichnet, dass** mehrere in der Transportrichtung (13) gegeneinander versetzt angeordnete Antriebszahnräder (17, 44, 54, 55) vorgesehen sind, welche mittels wenigstens eines Antriebsmotors (15, 45, 56, 57) um eine senkrecht zu der Transportrichtung (13) verlaufende Zahnradachse antreibbar sind und mittels derer die Antriebszahnstange (20, 21, 43, 53) gemeinschaftlich mit dem Werkstückträger (5, 6, 41, 51) in der Transportrichtung (13) antreibbar ist.

4. Werkstück-Transfervorrichtung nach einem der vorhergehenden Ansprüche, **dadurch gekennzeichnet, dass** das Antriebszahnrad (17, 44, 54, 55) und die Antriebszahnstange (20, 21, 43, 53) jeweils mit einer Triebstockverzahnung versehen sind.

5. Werkstück-Transfervorrichtung nach einem der vorhergehenden Ansprüche, **dadurch gekennzeichnet,**
• **dass** mehrere Werkstückträger (5, 6) vorgesehen und senkrecht zu der Transportrichtung (13) gegeneinander versetzt angeordnet sind,
• **dass** jeder der Werkstückträger (5, 6) in der Transportrichtung (13) aus einer Ausgangsposition in eine Zielposition mittels eines motorischen Antriebs (14) bewegbar ist, der einen Antriebsmotor (15) sowie ein zwischen dem Antriebsmotor (15) und dem betreffenden Werkstückträger (5, 6) angeordnetes Getriebe (18, 19) umfasst,
• **dass** jedes der Getriebe (18, 19) als motorseitiges Getriebeelement ein mittels des Antriebsmotors (15) um eine senkrecht zu der Transportrichtung (13) verlaufende Zahnradachse antreibbares Antriebszahnrad (17) und als weiteres Getriebeelement eine in der Transportrichtung (13) verlaufende Antriebszahnstange (20, 21) aufweist,
• **dass** von dem Antriebszahnrad (17) und der Antriebszahnstange (20, 21) jedes Getriebes (18, 19) das eine Getriebeelement an den betreffenden Werkstückträger (5, 6) angebunden und mittels des Antriebsmotors (15) gemeinschaftlich mit dem betreffenden Werkstückträger (5, 6) relativ zu dem anderen Getriebeelement in der Transportrichtung (13) antreibbar ist,
• **dass** das Antriebszahnrad (17) und die Antriebszahnstange (20, 21) jedes Getriebes (18, 19) mit einem Kupplungshub (28, 29) senkrecht zu der Transportrichtung (13) relativ zueinander zustellbar und dadurch miteinander in Eingriff bringbar sind,
• **dass** durch den Kupplungshub (28, 29) eine Antriebsverbindung zwischen dem Antriebszahnrad (17) und der Antriebszahnstange (20, 21) herstellbar ist, aufgrund derer das an den betreffenden Werkstückträger (5, 6) angebundene Getriebeelement gemeinschaftlich mit dem betreffenden Werkstückträger (5, 6) mittels des Antriebsmotors (15) in der Transportrichtung (13) antreibbar ist,
• **dass** mittels der Hubvorrichtung (25) jeder der Werkstückträger (5, 6) gemeinschaftlich mit dem damit verbundenen Antriebszahnrad (17) relativ zu der Antriebszahnstange (20, 21) des betreffenden Getriebes (18, 19) oder gemeinschaftlich mit der damit verbundenen Antriebszahnstange (20, 21) relativ zu dem Antriebszahnrad (17) des betreffenden Getriebes (18, 19) senkrecht zu der Transportrichtung (13) zustellbar ist und
• **dass** die beiden Werkstückträger (5, 6) an der Tragstruktur (9) der Hubvorrichtung (25) für die Werkstückträger (5,6) senkrecht zu der Transportrichtung (13) gegeneinander versetzt angeordnet sind und die Tragstruktur (9) für jeden der Werkstückträger (5, 6) eine sich in der Transportrichtung (13) erstreckende Lagerfläche (10, 11) aufweist, auf welcher der betreffende Werkstückträger (5, 6) in der Transportrichtung (13) bewegbar gelagert ist.

6. Werkstück-Transfervorrichtung nach Anspruch 5, **dadurch gekennzeichnet,**
• **dass** an zwei einander senkrecht zu der Transportrichtung (13) benachbarte Werkstückträger (5, 6) jeweils ein Antriebszahnrad (17) oder eine Antriebszahnstange (20, 21) angebunden ist,
• **dass** senkrecht zu der Transportrichtung (13) gesehen zwischen den an die Werkstückträger (5, 6) angebundenen Antriebszahnrädern (17) eine in der Transportrichtung (13) verlaufende gemeinsame Antriebszahnstange (20, 21) oder zwischen den an die Werkstückträger (5, 6) angebundenen Antriebszahnstangen (20, 21) ein gemeinsames Antriebszahnrad (17) angeordnet ist,
• **dass** durch einen senkrecht zu der Transportrichtung (13) ausgeführten ersten Kupplungshub (28, 29) das an den einen der Werkstückträger (5, 6) angebundene Antriebszahnrad (17) mit der gemeinsamen Antriebszahnstange (20, 21) oder die an den einen der Werkstückträger (5, 6) angebundene Antriebszahnstange (20, 21) mit dem gemeinsamen Antriebszahnrad (17) in Eingriff bringbar ist und
• **dass** durch einen senkrecht zu der Transportrichtung (13) in Gegenrichtung des ersten Kupplungshubs (28, 29) ausgeführten zweiten Kupplungshub (28, 29) das an den anderen der Werkstückträger (5, 6) angebundene Antriebszahnrad (17) mit der gemeinsamen Antriebszahnstange (20, 21) oder die an den anderen der Werkstückträger (5, 6) angebundene Antriebszahnstange (20, 21) mit dem gemeinsamen Antriebszahnrad (17) in Eingriff bringbar.

7. Werkstück-Transfervorrichtung nach Anspruch 6, **dadurch gekennzeichnet, dass** mittels des Hubantriebs der Hubvorrichtung (25) die Tragstruktur (9) gemeinschaftlich mit den beiden Werkstückträgern (5, 6) senkrecht zu der Transportrichtung (13) gegensinnig zustellbar ist und durch Zustellen der Tragstruktur (9) in einer ersten Zustellrichtung senkrecht zu der Transportrichtung (13) der erste Kupplungshub (28, 29) und durch Zustellen der Tragstruktur (9) in einer zweiten, der ersten Zustellrichtung entgegengesetzten Zustellrichtung der zweite Kupplungshub (28, 29) ausführbar ist.

8. Werkzeugmaschine zum Bearbeiten von Werkstücken, insbesondere von Blechen, mit einem Arbeitsbereich (2), in welchem Werkstücke, insbesondere Bleche, mittels einer Bearbeitungsvorrichtung der Werkzeugmaschine bearbeitbar sind sowie mit einer Werkstück-Transfervorrichtung, mittels derer Werkstücke dem Arbeitsbereich (2) der Werkzeugmaschine zuführbar und/ oder aus dem Arbeitsbereich (2) der Werkzeugmaschine abführbar sind, **dadurch gekennzeichnet, dass** als Werkstück-Transfervorrichtung eine Werkstück-Transfervorrichtung (4, 40, 50) nach einem der Ansprüche 1 bis 7 vorgesehen ist, wobei der oder die Werkstückträger (5, 6, 41, 51) aufgrund des Kupplungshubs (28, 29, 47, 61) bei zwischen dem Antriebszahnrad (17, 44, 54, 55) und der Antriebszahnstange (20, 21, 43, 53) eines Getriebes (18, 19, 48, 59, 60) hergestellter Antriebsverbindung senkrecht zu der Transportrichtung (13) auf einem Transportniveau angeordnet ist oder sind, auf welchem der oder die Werkstückträger (5, 6, 41, 51) in der Transportrichtung (13) in den Arbeitsbereich (2) der Werkzeugmaschine hinein oder aus dem Arbeitsbereich (2) der Werkzeugmaschine heraus bewegbar ist oder sind.

9. Werkzeugmaschine nach Anspruch 8, wobei eine Werkstück-Transfervorrichtung (4) nach Anspruch 7 vorgesehen ist, **dadurch gekennzeichnet, dass** die Tragstruktur (9), an welcher die beiden Werkstückträger (5, 6) senkrecht zu der Transportrichtung (13) gegeneinander versetzt angeordnet sind, außerhalb des Arbeitsbereichs (2) der Werkzeugmaschine vorgesehen ist, dass jeder der Werkstückträger (5, 6) aufgrund des Kupplungshubs (28, 29) auf dem Transportniveau angeordnet ist, wenn zwischen dem an den Werkstückträger (5, 6) angebundenen Antriebszahnrad (17) und der gemeinsamen Antriebszahnstange (20, 21) oder zwischen der an den Werkstückträger (5, 6) angebundenen Antriebszahnstange (20, 21) und dem gemeinsamen Antriebszahnrad (17) eine Antriebsverbindung hergestellt ist und dass die an der Tragstruktur (9) vorgesehene Lagerfläche (10, 11) für den auf dem Transportniveau angeordneten Werkstückträger (5, 6) in der Transportrichtung (13) mit einer Bewegungsbahn im Wesentlichen fluchtet, auf welcher der Werkstückträger (5, 6) in den Arbeitsbereich (2) der Werkzeugmaschine hinein oder aus dem Arbeitsbereich (2) der Werkzeugmaschine heraus bewegbar ist.

## Claims

1. Workpiece transfer device having a workpiece carrier (5, 6; 41; 51) and having a motorised drive (14, 46, 58), by means of which the workpiece carrier (5, 6, 41, 51) can be moved in a transport direction (13) from a starting position into a target position,
• wherein the motorised drive (14, 46, 58) comprises a drive motor (15, 45, 56, 57) and a gear mechanism (18, 19, 48, 59, 60) which is arranged between the drive motor (15, 45, 56, 57) and the workpiece carrier (5, 6, 41, 51),
• wherein the gear mechanism (18, 19, 48, 59, 60) which is arranged between the drive motor (15, 45, 56, 57) and the workpiece carrier (5, 6, 41, 51) has a motor-side gear element which can be driven by means of the drive motor (15, 45, 56, 57) and which is in the form of a toothed drive wheel (17, 44, 54, 55) which can be driven by means of the drive motor (15, 45, 56, 57) about a toothed wheel axle which extends perpendicularly to the transport direction (13), and an additional gear element which is constructed as a toothed drive rack (20, 21, 43, 53) which extends in the transport direction (13),
• wherein one gear element out of the toothed drive wheel (17, 44, 54, 55) and the toothed drive rack (20, 21, 43, 53)is connected to the workpiece carrier (5, 6, 41, 51) and thereby associated with the workpiece carrier (5, 6, 41, 51) and can be driven by means of the drive motor (15, 45, 56, 57) together with the workpiece carrier (5, 6, 41, 51) relative to the other gear element in the transport direction (13),
• wherein the toothed drive wheel (17, 44, 54, 55) and the toothed drive rack (20, 21, 43, 53) can be positioned relative to each other with a coupling stroke (28, 29, 47, 61) which is carried out by means of a lifting device (25) perpendicularly to the transport direction (13) and can thereby be brought into engagement with each other, wherein, as a result of the mutual engagement of the toothed drive wheel (17, 44, 54, 55) and the toothed drive rack (20, 21, 43, 53), there is produced between the toothed drive wheel (17, 44, 54, 55) and the toothed drive rack (20, 21, 43, 53) a drive connection, due to which the gear element which is associated with the workpiece carrier (5, 6, 41, 51) can be driven together with the workpiece carrier (5, 6, 41, 51) by means of the drive motor (15, 45, 56, 57) in the transport direction (13),
**characterised in that**
there is provided a lifting device (25) by means of which the coupling stroke (28, 29, 47, 61) can be carried out by the workpiece carrier (5, 6, 41, 51) together with the toothed drive wheel (17, 44, 54, 55) which is connected thereto being positioned relative to the toothed drive rack (20, 21, 43, 53) perpendicularly to the transport direction (13) by means of the lifting device (25) or by the workpiece carrier (5, 6, 41, 51) being able to be positioned together with the toothed drive rack (20, 21, 43, 53) which is connected thereto relative to the toothed drive wheel (17, 44, 54, 55) perpendicularly to the transport direction (13) by means of the lifting device (25), and
**in that** the lifting device (25) for the workpiece carrier (5, 6, 41, 51) has a carrier structure (9) which can be positioned by means of a lifting drive of the lifting device (25) perpendicularly to the transport direction (13), the carrier structure (9) having a bearing face (10, 11) for the workpiece carrier (5, 6, 41, 51) which bearing face (10, 11) extends in the transport direction (13) and on which the workpiece carrier (5, 6, 41, 51) is supported so as to be able to be moved in the transport direction (13).

2. Workpiece transfer device according to claim 1, **characterised in that** the driving toothed drive rack (20, 21, 43, 53) is associated with the workpiece carrier (5, 6, 41, 51), in particular connected to the workpiece carrier (5, 6, 41, 51).

3. Workpiece transfer device according to claim 2, **characterised in that** there are provided a plurality of toothed drive wheels (17, 44, 54, 55) which are arranged in a manner offset with respect to each other in the transport direction (13) and which can be driven by means of at least one drive motor (15, 45, 56, 57) about a toothed wheel axle which extends perpendicularly to the transport direction (13) and by means of which the toothed drive rack (20, 21, 43, 53) can be driven together with the workpiece carrier (5, 6, 41, 51) in the transport direction (13).

4. Workpiece transfer device according to any one of the preceding claims, **characterised in that** the toothed drive wheel (17, 44, 54, 55) and the toothed drive rack (20, 21, 43, 53) are each provided with a lantern gear toothing.

5. Workpiece transfer device according to any one of the preceding claims, **characterised in that**
• a plurality of workpiece carriers (5, 6) are provided and are arranged in a manner offset relative to each other perpendicularly to the transport direction (13),
• **in that** each of the workpiece carriers (5, 6) can be moved in the transport direction (13) from a starting position into a target position by means of a motorised drive (14) which comprises a drive motor (15) and a gear mechanism (18, 19) which is arranged between the drive motor (15) and the relevant workpiece carrier (5, 6),
• **in that** each of the gear mechanisms (18, 19) has as a motor-side gear element a toothed drive wheel (17) which can be driven by means of the drive motor (15) about a toothed wheel axle which extends perpendicularly to the transport direction (13) and as an additional gear element a toothed drive rack (20, 21) which extends in the transport direction (13),
• **in that** one gear element of the toothed drive wheel (17) and the toothed drive rack (20, 21) of each gear mechanism (18, 19) is associated with the relevant workpiece carrier (5, 6) and can be driven by means of the drive motor (15) together with the relevant workpiece carrier (5, 6) relative to the other gear element in the transport direction (13),
• **in that** the toothed drive wheel (17) and the toothed drive rack (20, 21) of each gear mechanism (18, 19) can be positioned relative to each other with a coupling stroke (28, 29) perpendicularly to the transport direction (13) and can thereby be brought into engagement with each other,
• **in that**, as a result of the coupling stroke (28, 29), there can be produced between the toothed drive wheel (17) and the toothed drive rack (20, 21) a drive connection, due to which the gear element which is associated with the relevant workpiece carrier (5, 6) can be driven together with the relevant workpiece carrier (5, 6) by means of the drive motor (15) in the transport direction (13),
• **in that** by means of the lifting device (25) each of the workpiece carriers (5, 6) together with the toothed drive wheel (17) which is connected thereto can be positioned relative to the toothed drive rack (20, 21) of the relevant gear mechanism (18, 19) or each of the workpiece carriers (5, 6) together with the toothed drive rack (20, 21) which is connected thereto can be positioned relative to the toothed drive wheel (17) of the relevant gear mechanism (18, 19) perpendicularly to the transport direction (13), and
• **in that** the two workpiece carriers (5, 6) are arranged on the carrier structure (9) of the lifting device (25) for the workpiece carriers (5, 6) in a manner offset with respect to each other perpendicularly to the transport direction (13) and the carrier structure (9) for each of the workpiece carriers (5, 6) has a bearing face (10, 11) which extends in the transport direction (13) and on which the relevant workpiece carrier (5, 6) is supported so as to be able to be moved in the transport direction (13).

6. Workpiece transfer device according to claim 5, **characterised in that**
• a toothed drive wheel (17) or a toothed drive rack (20, 21) is associated with each of two workpiece carriers (5, 6) which are adjacent to each other perpendicularly to the transport direction (13),
• **in that**, when viewed perpendicularly to the transport direction (13), a common toothed drive rack (20, 21) which extends in the transport direction (13) is arranged between the toothed drive wheels (17) which are associated with the workpiece carriers (5, 6) or a common toothed drive wheel (17) is arranged between the toothed drive racks (20, 21) which are associated with the workpiece carriers (5, 6),
• **in that**, as a result of a first coupling stroke (28, 29) which is carried out perpendicularly to the transport direction (13), the toothed drive wheel (17) which is associated with one of the workpiece carriers (5, 6) can be brought into engagement with the common toothed drive rack (20, 21) or the toothed drive rack (20, 21) which is associated with one of the workpiece carriers (5, 6) can be brought into engagement with the common toothed drive wheel (17), and
• **in that**, as a result of a second coupling stroke (28, 29) which is carried out perpendicularly to the transport direction (13) in an opposite direction to the first coupling stroke (28, 29), the toothed drive wheel (17) which is associated with the other of the workpiece carriers (5, 6) can be brought into engagement with the common toothed drive rack (20, 21) or the toothed drive rack (20, 21) which is associated with the other of the workpiece carriers (5, 6) can be brought into engagement with the common toothed drive wheel (17).

7. Workpiece transfer device according to claim 6, **characterised in that** by means of the lifting drive of the lifting device (25) the carrier structure (9) together with the two workpiece carriers (5, 6) can be positioned perpendicularly to the transport direction (13) in opposing directions and, by positioning the carrier structure (9) in a first positioning direction perpendicularly to the transport direction (13), the first coupling stroke (28, 29) and, by positioning the carrier structure (9) in a second positioning direction counter to the first positioning direction, the second coupling stroke (28, 29) can be carried out.

8. Machine tool for processing workpieces, in particular metal sheets, having an operating region (2) in which workpieces, in particular metal sheets, can be processed by means of a processing device of the machine tool, and having a workpiece transfer device, by means of which workpieces can be supplied to the operating region (2) of the machine tool and/or can be removed from the operating region (2) of the machine tool, **characterised in that** a workpiece transfer device (4, 40, 50) according to any one of claims 1 to 7 is provided as the workpiece transfer device, wherein the workpiece carrier(s) (5, 6, 41, 51) as a result of the coupling stroke (28, 29, 47, 61), while a drive connection is produced between the toothed drive wheel (17, 44, 54, 55) and the toothed drive rack (20, 21, 43, 53) of a gear mechanism (18, 19, 48, 59, 60), is/are arranged perpendicularly to the transport direction (13) on a transport level on which the workpiece carrier(s) (5, 6, 41, 51) can be moved in the transport direction (13) into the operating region (2) of the machine tool or out of the operating region (2) of the machine tool.

9. Machine tool according to claim 8, wherein a workpiece transfer device (4) according to claim 7 is provided, **characterised in that** the carrier structure (9), on which the two workpiece carriers (5, 6) are arranged in a manner offset relative to each other perpendicularly to the transport direction (13), is provided outside the operating region (2) of the machine tool, **in that** each of the workpiece carriers (5, 6) as a result of the coupling stroke (28, 29) is arranged on the transport level when between the toothed drive wheel (17) which is associated with the workpiece carrier (5, 6) and the common toothed drive rack (20, 21) or between the toothed drive rack (20, 21) associated with the workpiece carrier (5, 6) and the common toothed drive wheel (17) a drive connection is produced, and **in that** the bearing face (10, 11) which is provided on the carrier structure (9) for the workpiece carrier (5, 6) which is arranged on the transport level is substantially in alignment in the transport direction (13) with a movement path on which the workpiece carrier (5, 6) can be moved into the operating region (2) of the machine tool or out of the operating region (2) of the machine tool.

## Revendications

1. Dispositif de transfert de pièces d'usinage, avec un porte-pièce (5, 6 ; 41 ; 51) ainsi qu'avec un entraînement motorisé (14, 46, 58) au moyen duquel le porte-pièce (5, 6, 41, 51) peut être déplacé dans une direction de transport (13) d'une position de départ dans une position de destination,
- sachant que l'entraînement motorisé (14, 46, 58) comprend un moteur d'entraînement (15, 45, 56, 57) ainsi qu'un mécanisme de transmission (18, 19, 48, 59, 60) disposé entre le moteur d'entraînement (15, 45, 56, 57) et le porte-pièce (5, 6, 41, 51),
- sachant que le mécanisme de transmission (18, 19, 48, 59, 60) disposé entre le moteur d'entraînement (15, 45, 56, 57) et le porte-pièce (5, 6, 41, 51) présente un élément de transmission côté moteur, pouvant être entraîné au moyen du moteur d'entraînement (15, 45, 56, 57), sous la forme d'une roue dentée d'entraînement (17, 44, 54, 55) pouvant être entraînée au moyen du moteur d'entraînement (15, 45, 56, 57) autour d'un axe de roue dentée s'étendant perpendiculairement à la direction de transport (13), ainsi qu'un autre élément de transmission réalisé sous la forme d'une crémaillère d'entraînement (20, 21, 43, 53) s'étendant dans la direction de transport (13),
- sachant que, parmi la roue dentée d'entraînement (17, 44, 54, 55) et la crémaillère d'entraînement (20, 21, 43, 53), l'un des éléments de transmission est relié au porte-pièce (5, 6, 41, 51) et ainsi rattaché au porte-pièce (5, 6, 41, 51), et peut au moyen du moteur d'entraînement (15, 45, 56, 57) être entraîné conjointement avec le porte-pièce (5, 6, 41, 51) par rapport à l'autre élément de transmission dans la direction de transport (13),
- sachant que la roue dentée d'entraînement (17, 44, 54, 55) et la crémaillère d'entraînement (20, 21, 43, 53) peuvent être positionnées l'une par rapport à l'autre par une course d'accouplement (28, 29, 47, 61) exécutée perpendiculairement à la direction de transport (13) au moyen d'un dispositif de levage (25), et être ainsi amenées en engrènement mutuel, sachant qu'en vertu de l'engrènement mutuel de la roue dentée d'entraînement (17, 44, 54, 55) et de la crémaillère d'entraînement (20, 21, 43, 53), une liaison d'entraînement est réalisée entre la roue dentée d'entraînement (17, 44, 54, 55) et la crémaillère d'entraînement (20, 21, 43, 53), liaison en vertu de laquelle l'élément de transmission rattaché au porte-pièce (5, 6, 41, 51) peut être entraîné conjointement avec le porte-pièce (5, 6, 41, 51) dans la direction de transport (13) au moyen du moteur d'entraînement (15, 45, 56, 57),
**caractérisé**
**en ce qu'**un dispositif de levage (25) est prévu, au moyen duquel la course d'accouplement (28, 29, 47, 61) peut être exécutée par le fait qu'au moyen du dispositif de levage (25), le porte-pièce (5, 6, 41, 51) peut être, conjointement avec la roue dentée d'entraînement (17, 44, 54, 55) qui lui est reliée, positionné perpendiculairement à la direction de transport (13) par rapport à la crémaillère d'entraînement (20, 21, 43, 53), ou par le fait qu'au moyen du dispositif de levage (25), le porte-pièce (5, 6, 41, 51) peut être, conjointement avec la crémaillère d'entraînement (20, 21, 43, 53) qui lui est reliée, positionné perpendiculairement à la direction de transport (13) par rapport à la roue dentée d'entraînement (17, 44, 54, 55),
et **en ce que** le dispositif de levage (25) pour le porte-pièce (5, 6, 41, 51) présente une structure porteuse (9), qui peut être positionné perpendiculairement à la direction de transport (13) au moyen d'un entraînement de levage du dispositif de levage (25) et qui est pourvue d'une surface de palier (10, 11), s'étendant dans la direction de transport (13), pour le porte-pièce (5, 6, 41, 51), surface sur laquelle le porte-pièce (5, 6, 41, 51) est monté à déplacement dans la direction de transport (13).

2. Dispositif de transfert de pièces d'usinage selon la revendication 1, **caractérisé en ce que** la crémaillère d'entraînement (20, 21, 43, 53) est rattachée au porte-pièce (5, 6, 41, 51), en particulier est reliée au porte-pièce (5, 6, 41, 51).

3. Dispositif de transfert de pièces d'usinage selon la revendication 2, **caractérisé en ce que** plusieurs roues dentées d'entraînement (17, 44, 54, 55) disposées en décalage mutuel dans la direction de transport (13) sont prévues, lesquelles, au moyen d'au moins un moteur d'entraînement (15, 45, 56, 57), peuvent être entraînées autour d'un axe de roue dentée s'étendant perpendiculairement à la direction de transport (13), et au moyen desquelles la crémaillère d'entraînement (20, 21, 43, 53) peut être entraînée conjointement avec le porte-pièce (5, 6, 41, 51) dans la direction de transport (13).

4. Dispositif de transfert de pièces d'usinage selon l'une des revendications précédentes, **caractérisé en ce que** la roue dentée d'entraînement (17, 44, 54, 55) et la crémaillère d'entraînement (20, 21, 43, 53) sont respectivement pourvues d'une denture à fuseaux.

5. Dispositif de transfert de pièces d'usinage selon l'une des revendications précédentes, **caractérisé**
- **en ce que** plusieurs porte-pièce (5, 6) sont prévus et sont disposés en décalage mutuel perpendiculairement à la direction de transport (13),
- **en ce que** chacun des porte-pièce (5, 6) peut être déplacé dans la direction de transport (13) d'une position de départ dans une position de destination au moyen d'un entraînement motorisé (14), qui comprend un moteur d'entraînement (15) ainsi qu'un mécanisme de transmission (18, 19) disposé entre le moteur d'entraînement (15) et le porte-pièce concerné (5, 6),
- **en ce que** chacun des mécanismes de transmission (18, 19) présente comme élément de transmission côté moteur une roue dentée d'entraînement (17) pouvant être entraînée au moyen du moteur d'entraînement (15) autour d'un axe de roue dentée s'étendant perpendiculairement à la direction de transport (13), et comme autre élément de transmission une crémaillère d'entraînement (20, 21) s'étendant dans la direction de transport (13),
- **en ce que**, parmi la roue dentée d'entraînement (17) et la crémaillère d'entraînement (20, 21) de chaque mécanisme de transmission (18, 19), l'un des éléments de transmission est rattaché au porte-pièce concerné (5, 6) et peut, au moyen du moteur d'entraînement (15), être entraîné conjointement avec le porte-pièce concerné (5, 6) par rapport à l'autre élément de transmission dans la direction de transport (13),
- **en ce que** la roue dentée d'entraînement (17) et la crémaillère d'entraînement (20, 21) de chaque mécanisme de transmission (18, 19) peuvent être positionnées l'une par rapport à l'autre par une course d'accouplement (28, 29) perpendiculairement à la direction de transport (13), et être ainsi amenées en engrènement mutuel,
- **en ce que**, par la course d'accouplement (28, 29), une liaison d'entraînement peut être réalisée entre la roue dentée d'entraînement (17) et la crémaillère d'entraînement (20, 21), liaison en vertu de laquelle l'élément de transmission rattaché au porte-pièce concerné (5, 6) peut être entraîné conjointement avec le porte-pièce concerné (5, 6) dans la direction de transport (13) au moyen du moteur d'entraînement (15),
- **en ce que**, au moyen du dispositif de levage (25), chacun des porte-pièce (5, 6) peut être positionné perpendiculairement à la direction de transport (13), conjointement avec la roue dentée d'entraînement (17) qui lui est reliée, par rapport à la crémaillère d'entraînement (20, 21) du mécanisme de transmission concerné (18, 19), ou, conjointement avec la crémaillère d'entraînement (20, 21) qui lui est reliée, par rapport à la roue dentée d'entraînement (17) du mécanisme de transmission concerné (18, 19),
- et **en ce que** les deux porte-pièce (5, 6) sont disposés en décalage mutuel perpendiculairement à la direction de transport (13) sur la structure porteuse (9) du dispositif de levage (25) pour les porte-pièce (5, 6), et la structure porteuse (9) présente pour chacun des porte-pièce (5, 6) une surface de palier (10, 11), s'étendant dans la direction de transport (13), surface sur laquelle le porte-pièce concerné (5, 6) est monté à déplacement dans la direction de transport (13).

6. Dispositif de transfert de pièces d'usinage selon la revendication 5, **caractérisé**
- **en ce qu'**une roue dentée d'entraînement (17) ou une crémaillère d'entraînement (20, 21) est respectivement rattachée à chacun de deux porte-pièce (5, 6) mutuellement voisins perpendiculairement à la direction de transport (13),
- **en ce que**, considéré perpendiculairement à la direction de transport (13), une crémaillère d'entraînement commune (20, 21) s'étendant dans la direction de transport (13) est disposée entre les roues dentées d'entraînement (17) rattachées aux porte-pièce (5, 6), ou une roue dentée d'entraînement commune (17) est disposée entre les crémaillères d'entraînement (20, 21) rattachées aux porte-pièce (5, 6),
- **en ce que**, par une première course d'accouplement (28, 29) exécutée perpendiculairement à la direction de transport (13), la roue dentée d'entraînement (17) rattachée à l'un des porte-pièce (5, 6) peut être amenée en prise avec la crémaillère d'entraînement commune (20, 21), ou la crémaillère d'entraînement (20, 21) rattachée à l'un des porte-pièce (5, 6) peut être amenée en prise avec la roue dentée d'entraînement commune (17),
- et **en ce que**, par une deuxième course d'accouplement (28, 29) exécutée perpendiculairement à la direction de transport (13) en sens contraire à la première course d'accouplement (28, 29), la roue dentée d'entraînement (17) rattachée à l'autre des porte-pièce (5, 6) peut être amenée en prise avec la crémaillère d'entraînement commune (20, 21), ou la crémaillère d'entraînement (20, 21) rattachée à l'autre des porte-pièce (5, 6) peut être amenée en prise avec la roue dentée d'entraînement commune (17).

7. Dispositif de transfert de pièces d'usinage selon la revendication 6, **caractérisé en ce que**, au moyen de l'entraînement de levage du dispositif de levage (25), la structure porteuse (9) peut, conjointement avec les deux porte-pièce (5, 6), être positionnée en sens contraires perpendiculairement à la direction de transport (13), et la première course d'accouplement (28, 29) peut être exécutée par positionnement de la structure porteuse (9) dans un premier sens de positionnement perpendiculairement à la direction de transport (13), et la deuxième course d'accouplement (28, 29) peut être exécutée par positionnement de la structure porteuse (9) dans un deuxième sens de positionnement opposé au premier sens de positionnement.

8. Machine-outil pour l'usinage de pièces, en particulier de tôles, avec une zone de travail (2) dans laquelle des pièces, en particulier des tôles, peuvent être usinées au moyen d'un dispositif d'usinage de la machine-outil, ainsi qu'avec un dispositif de transfert de pièces d'usinage au moyen duquel des pièces peuvent être apportées à la zone de travail (2) de la machine-outil et/ou évacuées de la zone de travail (2) de la machine-outil,
**caractérisée en ce qu'**un dispositif de transfert de pièces d'usinage (4, 40, 50) selon l'une des revendications 1 à 7 est prévu comme dispositif de transfert de pièces d'usinage, sachant que le ou les porte-pièce (5, 6, 41, 51), en vertu de la course d'accouplement (28, 29, 47, 61) lorsque la liaison d'entraînement entre la roue dentée d'entraînement (17, 44, 54, 55) et la crémaillère d'entraînement (20, 21, 43, 53) d'un mécanisme de transmission (18, 19, 48, 59, 60) est réalisée, est ou sont disposés perpendiculairement à la direction de transport (13) à un niveau de transport où le ou les porte-pièce (5, 6, 41, 51) peut ou peuvent être déplacés dans la direction de transport (13) dans la zone de travail (2) de la machine-outil ou hors de la zone de travail (2) de la machine-outil.

9. Machine-outil selon la revendication 8, sachant qu'un dispositif de transfert de pièces d'usinage (4) selon la revendication 7 est prévu, **caractérisée en ce que** la structure porteuse (9), sur laquelle les deux porte-pièce (5, 6) sont disposés en décalage mutuel perpendiculairement à la direction de transport (13), est prévue en dehors de la zone de travail (2) de la machine-outil, **en ce que** chacun des porte-pièce (5, 6) est disposé en vertu de la course d'accouplement (28, 29) au niveau de transport lorsqu'une liaison d'entraînement est réalisée entre la roue dentée d'entraînement (17) rattachée au porte-pièce (5, 6) et la crémaillère d'entraînement commune (20, 21) ou entre la crémaillère d'entraînement (20, 21) rattachée au porte-pièce (5, 6) et la roue dentée d'entraînement commune (17), et **en ce que** la surface de palier (10, 11) prévue sur la structure porteuse (9) pour le porte-pièce (5, 6) disposé au niveau de transport est essentiellement alignée dans la direction de transport (13) avec une trajectoire de déplacement sur laquelle le porte-pièce (5, 6) peut être déplacé dans la zone de travail (2) de la machine-outil ou hors de la zone de travail (2) de la machine-outil.
